# EUROPEAN PATENT APPLICATION

(11) **EP 4 016 952 A1**
(43) Date of publication of application: **22.06.2022**
(21) Application number: 20216042.0
(22) Date of filing: 21.12.2020
(51) Int. Cl.: H04L 29/06, G08G 5/00, H04B 7/185

(54) **RADIO COMMUNICATION SYSTEM**

(71) Applicant: Rohde & Schwarz GmbH & Co. KG, 81671 München (DE)
(72) Inventor: Kilpert, Joerg, 81671 München (DE)
(74) Representative: Prinz & Partner mbB

(57) **Abstract**

The invention relates to a radio communication system (10) for communicating over-the-air. The radio communication system (10) comprises an airborne radio (12), at least one ground-based radio (14) configured to communicate with the airborne radio (12), and a voice communication system (26) configured to forward voice signals to the ground-based radio (14) for being transmitted to the airborne radio (12) and/or to receive voice signals from the ground-based radio (14) received from the airborne radio (12). The radio communication system (10) further comprises an IP network (20) as well as at least one external cryptographic device (34), and wherein the at least one external cryptographic device (34), the ground-based radio (14) and the voice communication system (26) are connected to the IP network (20).

## Description

The invention relates to a radio communication system for communicating over-the-air.

In certain radio communication applications, for instance air defense applications, the respective radio communication, particularly in the air and on the ground, is encrypted in order to protect the information submitted from any interceptions by a third party.

Usually, this encryption is done by means of special cryptographic devices that are configured to encrypt the information to be submitted, namely the voice signals, wherein Internet Protocol (IP) gateways are used to process the encrypted voice signals over an IP network. Hence, IP gateways are required at each radio site of the radio communication system.

However, this makes the entire radio communication system complex and expensive, as each radio site has its dedicated IP gateway, resulting in a static configuration of the radio communication system. Moreover, some of the gateways can only be used with a single radio such that several gateways are needed at a radio site in case that the respective radio site comprises several radios. Accordingly, the capital expenditures (CAPEX) of the radio communication system are high. Further, the operational expenditures (OPEX) are also high due to higher maintenance efforts caused by the high number of gateways.

Accordingly, there is a need for a radio communication system that can be established in a more cost-efficient manner.

The invention provides a radio communication system for communication over-the-air. The radio communication system comprises an airborne radio, at least one ground-based radio configured to communicate with the airborne radio and a voice communication system configured to forward voice signals to the ground-based radio for being transmitted to the airborne radio. Alternatively or additionally, the voice communication system is configured to receive voice signals from the ground-based radio received from the airborne radio. The radio communication system further comprises an IP network as well as at least one external cryptographic device. The at least one external cryptographic device, the ground-based radio and the voice communication system are connected to the IP network.

The invention is based on the finding that the external cryptographic as well as the ground-based radio are embedded in the IP network directly such that information provided by the external cryptographic device can be submitted over the IP network to the ground-based radio directly or vice versa. For this purpose, the ground-based radio has an integrated IP interface via which the ground-based radio is connected to the IP network. In a similar manner, the external cryptographic device is also associated with an IP interface that ensures the direct embedding of the external cryptographic device into the IP network. In addition, the voice communication system also has an IP interface via which the voice communication system is directly connected with or rather embedded in the IP network.

Thus, all of the components, namely the ground-based radio, the external cryptographic device as well as the voice communication system, have an IP interface via which they are connected to the IP network.

In fact, the voice communication system is enabled to forward the voice signals to be transmitted to the external cryptographic device over the IP network such that the voice signals will be encrypted by the external cryptographic device, thereby generating encrypted voice signals. The external cryptographic device transmits the encrypted voice signals directly to the ground-based radio, namely without any interconnected gateway, via the IP network. This concerns a radio transmission part of the ground-based radio, which interacts with the external cryptographic device via the IP network.

Moreover, the voice communication system is also enabled to receive voice signals from the external cryptographic device over the IP network wherein the voice signals have been decrypted by the external cryptographic device previously. The external cryptographic device has received encrypted voice signals directly from the ground-based radio, namely without any interconnected gateway, via the IP network. The ground-based radio has received the encrypted voice signals via from the flying platform. This concerns a radio receiving part of the ground-based radio, which interacts with the external cryptographic device via the IP network.

Generally, the external cryptographic device is used to encrypt voice signals received from the voice communication system, which are to be transmitted to the airborne radio. However, the external cryptographic device may also be configured to decrypt voice signals received from the airborne radio via the ground-based radio.

An aspect provides that the voice communication system and the at least one external cryptographic device are configured to establish a communication according to the interoperability standard ED-137. Thus, the communication between the voice communication system and the at least one external cryptographic device is defined by a standard.

Generally, the interoperability standard ED-137 allows to implement Voice over IP (VoIP) technology for exchanging the voice signals. The same interoperability standard is used by the external cryptographic device, particularly for receiving the voice signals from the voice communication system over the IP network. Hence, a communication between the IP-based voice communication system and the external cryptographic device is established, which is based on IP-technology, particularly based on rules associated with the interoperability standard ED-137.

Moreover, the external cryptographic device may also establish a communication according to the interoperability standard ED-137 with the ground-based radio. The interoperability standard ED-137 may be used even though no voice signals are exchanged between the external cryptographic device and the ground-based radio, but messages encompassing the encrypted voice signals, namely IP packets following the interoperability standard, particularly the rules associated therewith.

Another aspect provides that the at least external cryptographic device is directly connected with the ground-based radio via the IP network. As mentioned above, the ground-based radio can be directly embedded in the IP network without any interconnected devices such as gateways, thereby reducing the overall costs of the radio communication system. In fact, the IP interface is integrated within the ground-based radio. In other words, the ground-based radio has a directly integrated IP interface such that the ground-based radio is directly connected to the IP network.

Generally, less components or rather devices result in a radio communication system that is less prone to failure since the number of components/devices is reduced, thereby reducing the overall risk of failure.

The at least one external cryptographic device may be configured to encrypt the voice signals, thereby generating encrypted voice signals. The encrypted voice signals are submitted with an IP header to the respective ground-based radio that is used for submitting the encrypted voice signals. The respective IP header is generated by the external cryptographic device in order to address the message correctly, thereby ensuring that the message is transmitted to the intended ground-based radio via the IP network. The intended ground-based radio receives the message and removes the IP header such that the encrypted voice message is obtained.

The at least one external cryptographic device may also be configured to decrypt the encrypted voice signals, thereby generating decrypted voice signals. The decrypted voice signals are submitted with an IP header to the voice communication system, particularly a controller working position. The respective IP header is generated by the external cryptographic device in order to address the message correctly, thereby ensuring that the message is transmitted to the intended controller working position via the IP network. The intended controller working position receives the message and removes the IP header such that the decrypted voice message is obtained.

Furthermore, the ground-based radio may be configured to receive a message with an encrypted signal from the at least external cryptographic device, wherein the ground-based radio is configured to remove an IP header from the message received and to send an encrypted signal over-the-air. The ground-based radio is enabled to directly process the message received from the external cryptographic device such that the encrypted voice signal is obtained without decrypting the message from the cryptographic device, as only the IP header is removed the message received.

The ground-based radio may also be configured to receive an encrypted signal over-the-air from the airborne radio, wherein the ground-based radio is configured to obtain an encrypted voice signal from the signal received and to add an IP header to the encrypted voice signal in order to forward a message encompassing the encrypted voice signal to the external cryptographic device.

Generally, the ground-based radio has a digital interface, namely the IP interface, that is configured to receive the messages from the external cryptographic device via the IP network, wherein the messages encompass the encrypted voice messages. Further, the ground-based radio has an analog interface for transmitting the encrypted voice messages over-the-air.

A further aspect provides that the external cryptographic device is configured to directly forward a message encompassing an encrypted voice signal to the ground-based radio, particularly via the IP network. Thus, a separately formed gateway or any other interconnected device is not necessary anymore, as the ground-based radio has an integrated IP interface why which the ground-based radio is imbedded into the IP network.

The ground-based radio has a redundant IP interface comprising a main interface and a standby interface, in particular wherein the redundant IP interface is configured to switch between the main interface and the standby interface in case of failure. The respective IP interface ensures redundancy of the ground-based radio with regard to its connection to the IP network. In fact, the active IP interface can be switched over in case of an Ethernet switch failure, thereby improving the stability of the radio communication system.

The redundant IP interface may be configured to perform a switchover between the main interface and the standby interface according to IP mechanisms. The respective IP mechanisms may relate to a parallel redundancy protocol (PRP) or a bonding. The parallel redundancy protocol is a network protocol standard for Ethernet that provides seamless failover against failure of any network component.

Furthermore, several cryptographic devices may be provided that are embedded in the IP network. Generally, the different cryptographic devices may be used by the ground-based radio or rather by several ground-based radio if provided. In fact, the several cryptographic devices may be used for cryptographic pooling.

Generally, each cryptographic device may be dedicated to one ground-based radio that may be located at a different site, particularly compared to the location of the cryptographic device.

In addition, the several cryptographic devices may be configured to be dynamically assigned to the at least one ground-based radio, in particular wherein the several cryptographic devices are configured to be dynamically assigned to several ground-based radios. Accordingly, one of the several cryptographic devices may be selected in order to establish the communication with the voice communication system and/or the ground-based radio. The selection may altered over the time. Thus, a dynamic configuration of the entire radio communication system is ensured. The dynamic assignment may be done manually, namely by a controller working at a controller working position or an administrator.

The airborne radio, the ground-based radio and/or the cryptographic device may comprise a decryption device that is configured to decrypt encrypted voice signals, thereby obtaining encrypted information. The ground-based radio is enabled to transmit the encrypted voice signals after removing the IP header from the message received from the external cryptographic device. The airborne radio is configured to receive and decrypt the respective encrypted voice signals received. Then, the encrypted voice signals received are decrypted by means of the decryption device installed. Therefore, the encrypted communication between the airborne radio and the ground-based radio is enabled. Furthermore, the ground-based radio itself or rather the decryption device may be configured to decrypt the voice signals received from the airborne radio, which also relate to encrypted voice signals.

Particularly, the external cryptographic device comprises the decryption device such that the ground-based radio receives the encrypted voice signals from the airborne radio via its analog interface. The ground-based radio converts the encrypted voice signals into digital signals, namely IP packets, while adding an IP header such that the IP packets are forwarded via the IP network to the dedicated external cryptographic device for decrypting purposes. The external cryptographic device decrypts the encrypted voice signals received, thereby obtaining the voice signal which is again transmitted via the IP network to the voice communication system.

A key for encryption may be initially attached to the airborne radio, the ground-based radio and/or the cryptographic device. Accordingly, the integrated decryption device is enabled to decrypt the encrypted voice signals while using the key that is initially attached to the respective device comprising the decryption device.

The key for encryption may be provided via the IP network, in particular wherein a new key to be used is encrypted by means of the actual key or a dedicated transport key. Therefore, it is ensured that the key for decryption/encryption is changed over time. The ground-based radio and/or the cryptographic device receives the key via the IP network. The new key may be encrypted by the actual key or the dedicated transport key that is only used for encrypting the key to be used for encryption.

The radio communication system may comprise several ground-based radios that are connected to the IP network via a respective IP interface. The single external cryptographic device may be dynamically assigned to the different ground-based radios.

The airborne radio may be integrated in a flying platform, for instance an aircraft, a helicopter, an unmanned aerial vehicle (UAV) or a drone. Therefore, the radio communication system, particularly the voice communication system, can establish a respective communication to different kinds of flying platforms as far as this platform has a respective airborne radio.

In general, the at least one ground-based radio, the voice communication system and/or the at least one external cryptographic device may be connected to the IP network via respective redundant IP interface. Therefore, the entire infrastructure of the radio communication system is established in a redundant manner such that a failsafe note is provided.

As already discussed above, the ground-based radio communicates with the airborne radio in a bidirectional manner since the ground-based radio transmits signals to the flying platform and the ground-based radio receives signals from the flying platform.

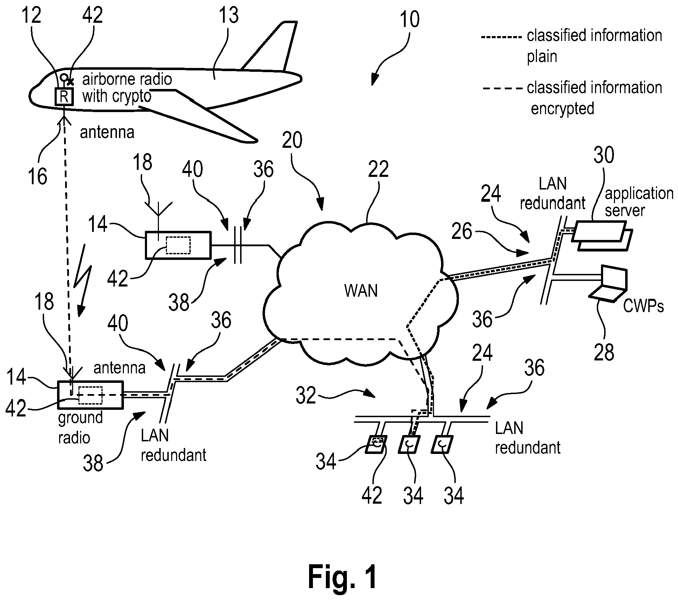

The foregoing aspects and many of the attendant advantages of the claimed subject matter will become more readily appreciated as the same become better understood by reference to the following detailed description when taken in conjunction with accompanying drawings. In the drawings, Figure 1 schematically shows an overview the radio communication system according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

In Figure 1, a radio communication system 10 is shown for communication over-the-air.

The radio communication system 10 comprises an airborne radio 12 that is assigned to a flying platform 13, namely an airplane. The airborne radio 12 communicates over-the-air with a ground-based radio 14, wherein the airborne radio 12 as well as the ground-based radio 14 each are assigned to a respective antenna 16, 18.

In the shown embodiment, two ground-based radios 14 are illustrated that may each be configured to establish the radio communication with the airborne radio 12.

In addition, the radio communication system 10 comprises an IP network 20 that comprises a wide area network (WAN) 22 as well as at least one local area network (LAN) 24. In the shown embodiment, two different local area networks 24 are provided, as will be discussed hereinafter in more detail.

Generally, the radio communication system 10 also comprises a voice communication system 26 that is associated with at least one controller working position 28 as well as a server 30, on which at least one application is running.

Accordingly, a controller or rather operator may communicate with a pilot of the flying platform 13 via the voice communication system 26 while using the controller working position 28 that may interact with an application running on the application server 30.

In addition the radio communication system 10 comprises a cryptographic pool 32 associated with one of the local area networks 24, wherein the cryptographic pool 32 comprises several external cryptographic devices 34 that are embedded in the IP network 20 appropriately.

Accordingly, the voice communication system 24, the cryptographic pool 32, namely the individual external cryptographic devices 34, as well as ground-based radio 14 each are embedded in the IP network 20, particularly via respective local area networks (LANs) 24 connected to the wide area network (WAN) 22.

Thus, each of the respective devices embedded in the IP network 20 have an IP interface 36.

The controller working position 28 and the server 30 are embedded in the same LAN 24 such that the components of the voice communication system 26 are embedded in the same LAN 24 that is connected to the WAN 22. The voice communication system 26 has the IP interface 36, particularly its components a common IP interface 36.

Further, the cryptographic pool 32, namely the several external cryptographic devices 34, is also assigned to an own LAN 24 that is connected to the WAN 22. The cryptographic pool 32 also has the IP interface 36, particularly several external cryptographic devices 34 have a common IP interface 36.

In addition, the ground-based radios 14 each also have the IP interface 36 via which they are connected to the WAN 22 even though they are located at different sites, particularly compared to the voice communication system 26 and/or the cryptographic pool 32.

Accordingly, the IP network 20 is established by the LANs 24 and WAN 22 to which the components of the radio communication system 10 are connected via their IP interfaces 36.

The respective IP interfaces 36 are established in a redundant manner, resulting in an operation of the radio communication system 10 that is less prone to failure.

In fact, the redundant IP interface 36 comprises a main interface 38 that is typically used as well as a standby interface 40 that is used in case of failure of the main interface 38.

Accordingly, a switchover between the respective interfaces 38, 40 may be performed in case of failure of the main interface 38. The respective switchover is performed according to IP mechanisms.

In general, the individual external cryptographic devices 34 can be dynamically allocated to different ground-based radios 14, as the external cryptographic devices 34 are directly embedded into the IP network 20 as well as the ground-based radios 14 are.

Hence, the first external cryptographic device 34 may be allocated for a certain time to the first ground-based radio 14, wherein the second external cryptographic device 34 may be allocated for a certain time to the second ground-based radio 14. After a certain period of time, the third external cryptographic device 34 may be allocated for a certain time to the first ground-based radio 14, wherein the first external cryptographic device 34 may be allocated for a certain time to the second ground-based radio 14. Thus, a dynamic allocation of the external cryptographic devices 34 is provided.

In general, the voice communication system 26 as well as the ground-based radio 14 and the external cryptographic devices 34 each are configured to communicate according to the interoperability standard ED-137.

Thus, an operator or rather controller may issue a voice signal via the voice communication system 26 while using the controller working position 28. The respective voice signal is transmitted via the IP network 20 to the intended one of the external cryptographic devices 34 in order to be encrypted, thereby generating encrypted voice signals. The intended external cryptographic device 34 is correctly addressed due to an IP header that is used when transmitting the voice signal over the IP network 20 to the cryptographic pool 32 comprising the several external cryptographic devices 34.

For encrypting the voice signals received from the voice communication system 26, the external cryptographic devices 34 use a key for encryption that has been attached to the cryptographic device 34 previously, for instance filled in with a fill gun initially.

Then, the decryption device 34 transmits a message with an IP header and the encrypted voice signal via the IP network 20 to the intended ground-based radio 14 that is used for radio communication. Again, the intended ground-based radio 14 is correctly addressed due to the IP header attached.

The intended ground-based radio 14 directly receives via its internal IP interface 36 the respective message, namely without any interconnected gateway.

Then, the ground-based radio 14 processes the message received while removing the IP header from the message such that the encrypted voice signal is obtained that can be transmitted directly to the airborne radio 12 without any decryption mechanisms to be performed by the ground-based radio 14.

Accordingly, the encrypted voice signal is transmitted over-the-air to the airborne radio 12 that receives the encrypted voice signal via its antenna 16.

For decrypting the encrypted voice signal, the airborne radio 12 has a decryption device 42 that also uses the respective key for encryption in order to decrypt the encrypted voice signal received, thereby obtaining the encrypted information. In a similar manner, the key for encryption is initially attached to the airborne radio 12 such that the airborne radio 12, particularly the decryption device 42, is enabled to decrypt the encrypted voice signal received when processing the encrypted voice signal.

Accordingly, a pilot of the flying platform 13 is enabled to listen to the respective information transmitted by the encrypted voice signal.

The communication from the airborne radio 12 to the controller or rather operator is done in a similar manner.

For decrypting the encrypted voice signals received from the airborne radio 12, the ground-based radio 14 itself or rather the external cryptographic devices 34 may comprise the respective decryption device 42 as indicated by the dashed lines in Figure 1.

When the key for encryption has to be renewed, a new one is transmitted to the respective decryption device 42 via the IP network 20, for instance from the server 30. The new key to be used may be encrypted by means of the actual key or a dedicated transport key, thereby ensuring that the new key is submitted in an encrypted manner.

Accordingly, a cost-efficient radio communication system 10 is established, as the respective components are directly embedded in the IP network 20, wherein the ground-based radio 14 is enabled to receive the encrypted voice signals from the external decryption devices 34 directly via the IP network 20 and to remove the IP header used for directing the encrypted voice signals to the respective ground-based radio 14 in order to be enabled to transmit encrypted voice signals to the airborne radio 12.

## Claims

1. A radio communication system for communicating over-the-air, wherein the radio communication system (10) comprises an airborne radio (12), at least one ground-based radio (14) configured to communicate with the airborne radio (12), and a voice communication system (26) configured to forward voice signals to the ground-based radio (14) for being transmitted to the airborne radio (12) and/or to receive voice signals from the ground-based radio (14) received from the airborne radio (12), wherein the radio communication system (10) further comprises an IP network (20) as well as at least one external cryptographic device (34), and wherein the at least one external cryptographic device (34), the ground-based radio (14) and the voice communication system (26) are connected to the IP network (20).

2. The radio communication system according to claim 1, wherein the voice communication system (26) and the at least one external cryptographic device (34) are configured to establish a communication according to the interoperability standard ED-137.

3. The radio communication system according to claim 1 or 2, wherein the at least one external cryptographic device (34) is directly connected with the ground-based radio (14) via the IP network (20).

4. The radio communication system according to any of the preceding claims, wherein the at least one external cryptographic device (34) is configured to encrypt the voice signals, thereby generating encrypted voice signals.

5. The radio communication system according to any of the preceding claims, wherein the ground-based radio (14) is configured to receive a message with an encrypted voice signal from the at least one external cryptographic device (34) over the IP network (20), and wherein the ground-based radio (14) is configured to remove an IP header from the message received and to send the encrypted voice signal over-the-air.

6. The radio communication system according to any of the preceding claims, wherein the external cryptographic device (34) is configured to directly forward a message encompassing an encrypted voice signal to the ground-based radio (14), particularly via the IP network (20).

7. The radio communication system according to any of the preceding claims, wherein the ground-based radio (14) has a redundant IP interface (36) comprising a main interface (38) and a standby interface (40), in particular wherein the redundant IP interface (36) is configured to switch between the main interface (38) and the standby interface (40).

8. The radio communication system according to claim 7, wherein the redundant IP interface (36) is configured to perform a switchover between the main interface (38) and the standby interface (40) according to IP mechanisms.

9. The radio communication system according to any of the preceding claims, wherein several cryptographic devices (34) are provided that are embedded in the IP network (20).

10. The radio communication system according to claim 9, wherein the several cryptographic devices (34) are configured to be dynamically assigned to the at least one ground-based radio (14), in particular wherein the several cryptographic devices (34) are configured to be dynamically assigned to several ground-based radios (14).

11. The radio communication system according to any of the preceding claims, wherein the airborne radio (12), the ground-based radio (14) and/or the cryptographic device (34) comprises a decryption device (42) that is configured to decrypt encrypted voice signals, thereby obtaining encrypted information.

12. The radio communication system according to any of the preceding claims, wherein a key for encryption is initially attached to the airborne radio (12), the ground-based radio (14) and/or the cryptographic device (34).

13. The radio communication system according to claim 12, wherein the key for encryption is provided via the IP network (20), in particular wherein a new key to be used is encrypted by means of the actual key or a dedicated transport key.

14. The radio communication system according to any of the preceding claims, wherein the radio communication system (10) comprises several ground-based radios (14) that are connected to the IP network (20) via a respective IP interface (36).

15. The radio communication system according to any of the preceding claims, wherein the airborne radio (12) is integrated in a flying platform (13), particularly an aircraft, a helicopter, an unmanned aerial vehicle or a drone.
